# FASCICULE DE BREVET EUROPEEN

(11) **EP 2 991 863 B1**
(45) Date de publication et mention de la délivrance du brevet: **01.07.2020**
(21) Numéro de dépôt: 14726697.7
(22) Date de dépôt: 25.04.2014
(51) Int. Cl.: B60S 1/52

(54) **GICLEUR MODULAIRE POUR UN SYSTÈME DE LAVAGE DE VITRE(S) DE VÉHICULE**
MODULARE DÜSE FÜR EINE FAHRZEUGSCHEIBENWASCHANLAGE
MODULAR NOZZLE FOR A VEHICLE WINDOW WASHING SYSTEM

(30) Priorité: 30.04.2013 FR 1353937
(43) Date de publication de la demande: 09.03.2016
(73) Titulaire: PSA Automobiles SA, 78300 Poissy (FR)
(72) Inventeur: BERTHOLD, Julien, F-25190 Montancy (FR); BUSSON, Yvan, F-25200 Montbeliard (FR)
(74) Mandataire: Jeannin, Laurent Jean-Pierre
(86) Numéro de dépôt international: PCT/FR2014/051001
(87) Numéro de publication internationale: WO 2014/177794

(56) Documents cités:
- EP-A1- 1 428 735
- WO-A1-2008/107043
- DE-A1-102007 053 986
- FR-A1- 2 965 776

## Description

L'invention concerne les systèmes de lavage de vitre(s) qui équipent certains véhicules, éventuellement de type automobile, et plus précisément les gicleurs qui équipent de tels systèmes.

La plupart des systèmes de lavage de vitre(s) qui équipent des véhicules, éventuellement automobiles, comprennent une pompe associée à un réservoir de liquide de lavage, au moins un gicleur, et au moins un conduit d'alimentation couplant la sortie de la pompe au gicleur.

Un gicleur, qui est destiné à équiper un véhicule, est généralement agencé en fonction de la région dans laquelle ce véhicule doit circuler et/ou du niveau de prestation souhaité pour ce véhicule, et éventuellement en fonction du climat régnant dans cette région. Ainsi, on utilise généralement des gicleurs fluidiques dans les pays à climat tempéré (et notamment dans une grande partie de l'Europe), des gicleurs à bille(s) dans les pays à climat (très) froid, et des gicleurs à barillet (technique similaire à celle à bille(s) mais pour des jets non orientables) dans différentes régions.

Les gicleurs des types précités comprennent généralement un corps creux comportant un logement dans lequel est installé un bloc (fonctionnel), parfois appelé cassette technique, et propre à produire au moins un jet de lavage selon une certaine technique (fluidique, à barillet ou à bille(s)). Les blocs qui mettent en œuvre des techniques différentes présentent actuellement des formes notablement différentes, et donc les corps creux qui les logent respectivement doivent être spécifiquement conçus pour eux en fonction de leur technique. On est donc contraint de concevoir des moules différents pour réaliser les différents corps creux, ce qui s'avère onéreux. De plus, lorsqu'un constructeur automobile veut commercialiser un modèle de véhicule dans différentes régions correspondant à des techniques de production de jet différentes, il est contraint de stocker des corps creux de différents types, adaptés à ces différentes techniques, ce qui s'avère contraignant en matière de gestion de stock. En outre, lorsque l'on veut changer la technique mise en œuvre par un gicleur, par exemple pour utiliser son véhicule dans une autre région que celle prévue initialement, on est contraint de remplacer intégralement ce gicleur, ce qui de nouveau s'avère onéreux.

Le document EP 1 428 735 A1 montre un gicleur pour un système de lavage de vitre de véhicule selon le préambule de la première revendication.

L'invention a donc pour but d'améliorer la situation grâce à des gicleurs modulaires.

Elle propose notamment à cet effet un gicleur, destiné à faire partie d'un système de lavage de vitre(s) de véhicule comprenant au moins un conduit d'alimentation, et comprenant :
- un corps creux muni d'une première extrémité, propre à être couplée à une extrémité du conduit d'alimentation, et d'une seconde extrémité, comportant un logement communiquant avec l'extérieur et avec cette première extrémité, et
- un bloc (fonctionnel) installé dans le logement et choisi dans un premier groupe comprenant au moins un premier bloc de forme adaptée à son logement dans le logement et propre à produire au moins un jet de lavage selon une première technique et un deuxième bloc de forme adaptée à son logement dans le logement et propre à produire au moins un jet de lavage selon une deuxième technique différente de la première technique.

Ainsi, un même corps creux va pouvoir accueillir des blocs (ou cassettes techniques) de types différents pour constituer des gicleurs de types différents selon les besoins, ce qui s'avère particulièrement économique et facilite la gestion des stocks.

Le gicleur selon l'invention peut comporter d'autres caractéristiques qui peuvent être prises séparément ou en combinaison, et notamment :
- le premier groupe peut également comprendre un troisième bloc de forme adaptée à son logement dans le logement et propre à produire au moins un jet de lavage selon une troisième technique différente des première et deuxième techniques ;
   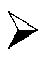 un bloc mettant en œuvre la technique à bille(s) peut être choisi dans un sous-groupe comprenant au moins un bloc mono-bille propre à produire un unique jet de lavage, un bloc à deux billes propre à produire deux jets de lavage, et un bloc à trois billes propre à produire trois jets de lavage ;
   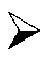 un bloc mettant en œuvre la technique à barillet peut être choisi dans un sous-groupe comprenant au moins un bloc mono-sortie propre à produire un unique jet de lavage, un bloc à deux sorties propre à produire deux jets de lavage, et un bloc à trois sorties propre à produire trois jets de lavage ;
   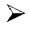 un bloc mettant en œuvre la technique fluidique peut être choisi dans un sous-groupe comprenant au moins un bloc mono-conduit propre à produire un unique jet de lavage, un bloc à deux conduits propre à produire deux jets de lavage, et un bloc à trois conduits propre à produire trois jets de lavage.

L'invention propose également un système de lavage, destiné à être associé à au moins une vitre d'un véhicule, et comprenant au moins un conduit d'alimentation, et au moins un gicleur du type de celui présenté ci-avant et couplé à une extrémité d'un conduit d'alimentation.

L'invention propose également un véhicule, éventuellement de type automobile, et comprenant au moins une vitre et au moins un système de lavage du type de celui présenté ci-avant et destiné à envoyer du liquide de lavage sur cette vitre.

D'autres caractéristiques et avantages de l'invention apparaîtront à l'examen de la description détaillée ci-après, et des dessins annexés (obtenus en CAO/DAO, d'où le caractère apparemment discontinu de certaines lignes et les niveaux de gris), sur lesquels :
- la figure 1 illustre schématiquement, dans une vue en perspective, un corps creux et un bloc non assemblés d'un exemple de réalisation d'un gicleur selon l'invention,
- la figure 2 illustre schématiquement, dans une vue en perspective, un exemple de réalisation d'un bloc fluidique mono-conduit destiné à faire partie d'un gicleur selon l'invention,
- la figure 3 illustre schématiquement, dans une vue en perspective, un premier exemple de réalisation d'un bloc à bille destiné à faire partie d'un gicleur selon l'invention,
- la figure 4 illustre schématiquement, dans une vue en perspective, un deuxième exemple de réalisation d'un bloc à deux billes destiné à faire partie d'un gicleur selon l'invention,
- la figure 5 illustre schématiquement, dans une vue en perspective, un troisième exemple de réalisation d'un bloc à trois billes destiné à faire partie d'un gicleur selon l'invention,
- la figure 6 illustre schématiquement, dans une vue en perspective, un premier exemple de réalisation d'un bloc à barillet mono-sortie destiné à faire partie d'un gicleur selon l'invention,
- la figure 7 illustre schématiquement, dans une vue en perspective, un deuxième exemple de réalisation d'un bloc à barillet à deux sorties destiné à faire partie d'un gicleur selon l'invention, et
- la figure 8 illustre schématiquement, dans une vue en perspective, un troisième exemple de réalisation d'un bloc à barillet à trois sorties destiné à faire partie d'un gicleur selon l'invention.

L'invention a notamment pour but de proposer un gicleur G destiné à équiper un système de lavage de vitre(s) de véhicule.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout type de véhicule comportant au moins une vitre à laquelle doit être associé un système de lavage.

Par ailleurs, on considère dans ce qui suit, à titre d'exemple non limitatif, que le système de lavage est destiné à être associé au pare-brise du véhicule. Mais en variante il pourrait être destiné à être associé au hayon du véhicule, ou bien à la fois au pare-brise et au hayon.

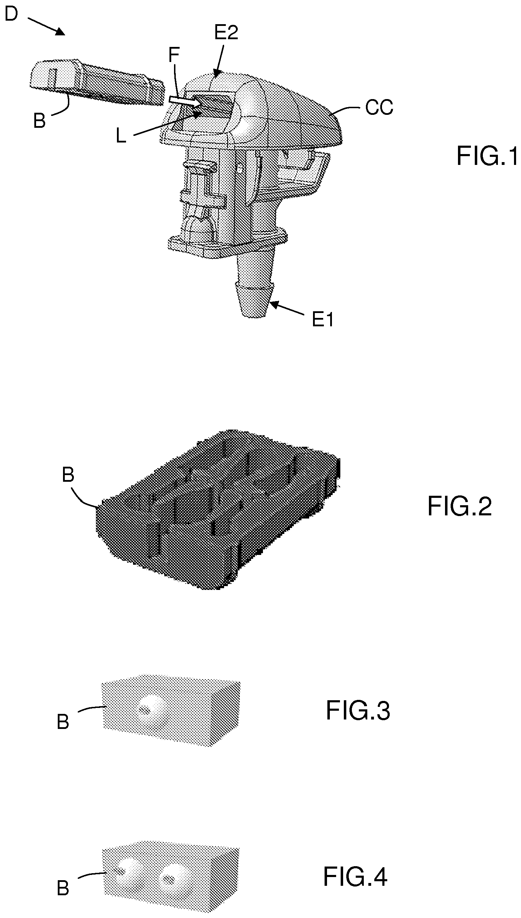

On a schématiquement représenté sur la figure 1 un exemple non limitatif de gicleur G selon l'invention. Comme illustré, un tel gicleur G comprend un corps creux CC et un bloc (fonctionnel) B.

Le corps creux CC comprend une première extrémité E1, qui est agencée de manière à être couplée à une extrémité d'un conduit d'alimentation du système de lavage, et une seconde extrémité E2, qui comporte un logement L communiquant avec l'extérieur et avec la première extrémité E1 (via un conduit interne du corps creux CC).

Le bloc (ou cassette technique) B est destiné à être installé dans le logement L (par insertion suivant la flèche F). Par ailleurs, il (B) est choisi, en fonction des besoins (et donc de la technique à mettre en œuvre souhaitée), dans un premier groupe qui comprend au moins un premier bloc de forme adaptée à son logement dans le logement L et propre à produire au moins un jet de lavage selon une première technique et un deuxième bloc de forme adaptée à son logement dans le logement L et propre à produire au moins un jet de lavage selon une deuxième technique différente de la première technique.

Ainsi, le corps creux CC est un élément modulaire qui peut être couplé à différents blocs B mettant en œuvre des techniques différentes, dès lors que ces différents blocs B présentent tous une forme qui permet leur logement dans son logement L.

On notera qu'il est avantageux que ce premier groupe comprenne également au moins un troisième bloc de forme adaptée à son logement dans le logement L et propre à produire au moins un jet de lavage selon une troisième technique qui est différente des première et deuxième techniques. Il est encore plus avantageux que ce premier groupe comprenne un nombre de blocs de types différents égal au nombre de techniques de production de jet différentes, connues de l'homme de l'art et pouvant être mises en œuvre dans un gicleur de véhicule.

Par exemple, chacune des techniques de production de jet peut être choisie dans un deuxième groupe qui comprend au moins la technique fluidique, la technique à barillet et la technique à bille(s). Ces trois techniques étant bien connues de l'homme de l'art, elles ne seront donc pas décrites ici.

Un exemple de bloc fluidique à mono-conduit B est illustré schématiquement sur les figures 1 et 2.

Trois exemples de blocs à bille(s) B sont respectivement illustrés schématiquement sur les figures 3 à 5. On notera que les formes (parallélépipédiques) de ces trois blocs B sont très schématiques et partiellement adaptées à la forme du logement L du corps creux CC de la figure 1. Dans la réalité, ces blocs B comportent des coins biseautés sur certaines de leurs faces, comme dans le bloc fluidique à mono-conduit B illustré sur les figures 1 et 2.

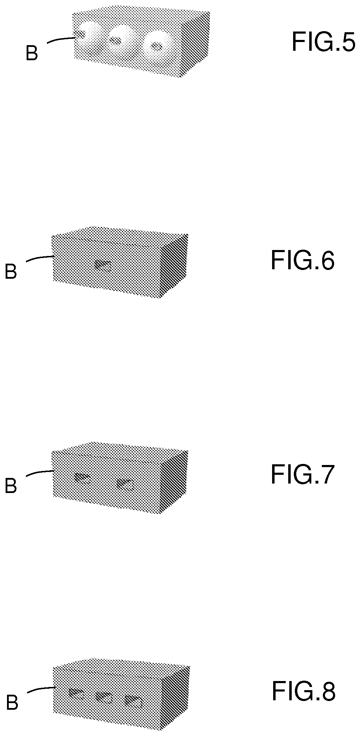

Trois exemples de blocs à barillet B sont respectivement illustrés schématiquement sur les figures 6 à 8. On notera ici également que les formes (parallélépipédiques) de ces trois blocs B sont très schématiques et partiellement adaptées à la forme du logement L du corps creux CC de la figure 1. Dans la réalité, ces blocs B comportent des coins biseautés sur certaines de leurs faces, comme dans le bloc fluidique à mono-conduit B illustré sur les figures 1 et 2.

On notera que le deuxième groupe pourrait comprendre d'autres techniques de production de jet que celles mentionnées dans le paragraphe précédent, en complément et/ou en remplacement.

Comme cela ressort des paragraphes précédents, il est particulièrement avantageux que le bloc B qui doit être installé dans un corps creux CC puisse non seulement être choisi au sein du premier groupe (et donc également du deuxième groupe), mais également au sein d'un sous-groupe d'une technique de production de jet du deuxième groupe. Chaque sous-groupe peut, par exemple, correspondre à un nombre particulier de jets produits (par exemple compris entre un et trois).

Ainsi, un bloc B mettant en œuvre la technique à bille(s) peut être choisi dans un sous-groupe comprenant au moins un bloc mono-bille propre à produire un unique jet de lavage (voir figure 3), un bloc à deux billes propre à produire deux jets de lavage (voir figure 4), et un bloc à trois billes propre à produire trois jets de lavage (voir figure 5).

De même, un bloc B mettant en œuvre la technique à barillet peut être choisi dans un sous-groupe comprenant au moins un bloc mono-sortie propre à produire un unique jet de lavage (voir figure 6), un bloc à deux sorties propre à produire deux jets de lavage (voir figure 7), et un bloc à trois sorties propre à produire trois jets de lavage (voir figure 8).

Egalement de même, un bloc B mettant en œuvre la technique fluidique peut être choisi dans un sous-groupe comprenant au moins un bloc mono-conduit propre à produire un unique jet de lavage (voir figures 1 et 2), un bloc à deux conduits propre à produire deux jets de lavage (non illustré), et un bloc à trois conduits propre à produire trois jets de lavage (non illustré).

L'invention offre plusieurs avantages, parmi lesquels :
- une modularité du corps creux et donc une réduction des coûts et une simplification de la gestion des stocks,
- un gain de temps de développement, puisqu'il suffit désormais de concevoir des nouveaux blocs qui peuvent être logés dans le logement d'un corps creux existant,
- la possibilité de ne remplacer que le bloc d'un gicleur équipant un véhicule lorsque l'on veut changer la technique de production de jet.

## Revendications

1. Dispositif comprenant un gicleur (G) pour un système de lavage de vitre(s) de véhicule comprenant au moins un conduit d'alimentation, comprenant i) un corps creux (CC) muni d'une première extrémité (E1) propre à être couplée à une extrémité dudit conduit d'alimentation et d'une seconde extrémité (E2) comportant un logement (L) communiquant avec l'extérieur et avec ladite première extrémité (E1), et ii) un bloc (B) installé dans ledit logement (L) et choisi dans un premier groupe de blocs comprenant au moins un premier bloc de forme adaptée à son logement dans ledit logement (L) et propre à produire au moins un jet de lavage selon une première technique et un deuxième bloc de forme adaptée à son logement dans ledit logement (L) propre à produire au moins un jet de lavage selon une deuxième technique différente de ladite première technique, **caractérisé en ce que** chacune desdites techniques de production est choisie dans un deuxième groupe de production de jets comprenant au moins une technique uniquement fluidique, une technique uniquement à barillet et une technique uniquement à bille(s).

2. Dispositif selon la revendication 1, **caractérisé en ce que** ledit premier groupe comprend un troisième bloc de forme adaptée à son logement dans ledit logement (L) propre à produire au moins un jet de lavage selon une troisième technique différente desdites première et deuxième techniques.

3. Dispositif selon l'une des revendications 1 ou 2, **caractérisé en ce qu'**un bloc mettant en œuvre ladite technique à bille(s) est choisi dans un sous-groupe comprenant au moins un bloc mono-bille propre à produire un unique jet de lavage, un bloc à deux billes propre à produire deux jets de lavage, et un bloc à trois billes propre à produire trois jets de lavage.

4. Dispositif selon l'une des revendications précédentes, **caractérisé en ce qu'**un bloc mettant en œuvre ladite technique à barillet est choisi dans un sous-groupe comprenant au moins un bloc mono-sortie propre à produire un unique jet de lavage, un bloc à deux sorties propre à produire deux jets de lavage, et un bloc à trois sorties propre à produire trois jets de lavage.

5. Dispositif selon l'une des revendications précédentes, **caractérisé en ce qu'**un bloc mettant en œuvre ladite technique fluidique est choisi dans un sous-groupe comprenant au moins un bloc mono-conduit propre à produire un unique jet de lavage, un bloc à deux conduits propre à produire deux jets de lavage, et un bloc à trois conduits propre à produire trois jets de lavage.

6. Système de lavage pour au moins une vitre d'un véhicule, ledit système comprenant au moins un conduit d'alimentation, **caractérisé en ce qu'**il comprend en outre au moins un gicleur (G) selon l'une des revendications précédentes, couplé à une extrémité d'un conduit d'alimentation.

7. Véhicule comprenant au moins une vitre, **caractérisé en ce qu'**il comprend en outre au moins un système de lavage selon la revendication 6, destiné à envoyer du liquide de lavage sur ladite vitre.

8. Véhicule selon la revendication 7, **caractérisé en ce qu'**il est de type automobile.

## Patentansprüche

1. Vorrichtung, die eine Düse (G) für ein System des Scheibenwaschens (s) umfasst, von Fahrzeug, das mindestens eine Ernährungsleitung umfasst, die i umfasst) ein hohler Körper (CC), der mit einem ersten Ende (E1) ausgestattet wurde, das eigen ist, an einem Ende der Leitung der Ernährung und eines zweiten Endes (E2) zusammengefügt zu werden, die eine Wohnung (L) umfassen, die mit der Außenseite und mit besagt erstem Ende (E1) und einem ii) Block (b) mitteilt, der in besagter Wohnung (L) installiert und der in einer ersten Gruppe von Blöcken gewählt wurde, die mindestens einen ersten Block der Form umfassen, die ihrer Wohnung in besagter Wohnung (L) angepasst ist und die eigen ist, einen Waschwurf mindestens zu produzieren nach einer ersten Technik und ein zweiter Block der Form, die ihrer Wohnung in besagter Wohnung (L) angepasst ist die eigen ist, einen Waschwurf nach einer zweiten anderen Technik der ersten Technik mindestens zu produzieren, **dadurch gekennzeichnet, dass** jede der Produktionstechniken in einer zweiten Gruppe der Produktion von Würfen gewählt wird, die mindestens eine nur flüssig Technik, eine Technik nur an Fass und eine Technik nur an Kugel (s) umfassen.

2. Vorrichtung nach Anspruch 1, **dadurch gekennzeichnet, dass** besagte erste Gruppe begreift ein dritter Block der Form, die ihrer Wohnung in besagter Wohnung (L) angepasst ist die eigen ist, einen Waschwurf nach einer dritten anderen Technik der ersten und zweiten Techniken mindestens zu produzieren.

3. Vorrichtung nach einer Anspruch 1 oder 2, **dadurch gekennzeichnet, dass** ein Block, der besagtes Kugeltechnik (s) verwirklicht, in einer Untergruppe gewählt wird, die mindestens einen Block mono-Kugel erfasst, die eigen ist, einen einmaligen Waschwurf zu produzieren, ein Block an zwei Kugeln sauber, zwei Waschwürfe zu produzieren und ein Block an drei Kugeln sauber, drei Waschwürfe zu produzieren.

4. Vorrichtung nach einer der vorhergehenden Anspruch, **dadurch gekennzeichnet, dass** ein Block, der besagtes Faßtechnik verwirklicht, in einer Untergruppe gewählt wird, die mindestens einen Block mono-Ausgang erfasst, der eigen ist, einen einmaligen Waschwurf zu produzieren, ein Block an zwei Ausgangen sauber, zwei Waschwürfe zu produzieren und ein Block an drei Ausgangen sauber, drei Waschwürfe zu produzieren.

5. Vorrichtung nach einer der vorhergehenden Anspruch, **dadurch gekennzeichnet, dass** ein Block, der besagtes flüssig Technik verwirklicht, in einer Untergruppe gewählt wird, die mindestens einen Block mono-Leitung erfasst, die eigen ist, einen einmaligen Waschwurf zu produzieren, ein Block an zwei Leitungen sauber, zwei Waschwürfe zu produzieren und ein Block an drei Leitungen sauber, drei Waschwürfe zu produzieren.

6. Waschsystem für mindestens eine Scheibe eines Fahrzeugs besagtes System, das mindestens eine Ernährungsleitung umfasst, **dadurch gekennzeichnet, dass** er außerdem mindestens eine Düse (G) nach einer der vorhergehenden Anspruch umfasst, die an einem Ende einer Ernährungsleitung zusammengefügt wurde.

7. Fahrzeug, das mindestens eine Scheibe umfasst, **dadurch gekennzeichnet, dass** er außerdem mindestens ein Waschsystem nach Anspruch 6 umfasst, das Waschflüssigkeit auf besagter Scheibe senden soll.

8. Fahrzeug nach **dadurch gekennzeichnet, dass** 7, was es von Autotyp ist.

## Claims

1. Device including a jet (G) for a system of glass washing of vehicle including at least a supply pipe, including i) a hollow body (CC) provided with a first (E1) end suitable to be coupled to an end of said supply pipe and provided a second end (E2) comprising a housing (L) communicating with outside and the aforementioned first (E1) end, and a ii) block (B) installed in the aforementioned housing (L) and chosen in a first group of blocks including at least a first block of form adapted to its housing in the aforementioned housing (L) and suitable to produce at least a jet of washing according to a first technique and a second block of form adapted to its housing in the aforementioned housing (L) suitable to produce at least a jet of washing according to a second technique different of the aforesaid first technique, **characterized in that** each one of the aforesaid production techniques is selected in a second group of production of jets including at least an only fluidic technique, a technique only with barrel and a technique only with ball (S).

2. Device according to claim 1, **characterized in that** the aforementioned first group understands a third block of form adapted to its housing in the aforementioned housing (L) suitable to produce at least a jet of washing according to a third technique different of the aforesaid first and second techniques.

3. Device according to one of the claims 1 or 2, **characterized in that** a block implementing technical the aforementioned at ball (S) is selected in a sub-group including at least a block mono-ball-tests clean to produce a single jet of washing, a block with two balls suitable to produce two jets of washing, and a block with three balls suitable to produce three jets of washing.

4. Device according to one of the preceding claims, **characterized in that** a block implementing technical the aforementioned at barrel is selected in a sub-group including at least a block mono-exit suitable to produce a single jet of washing, a block at two exits suitable to produce two jets of washing, and a block at three exits suitable to produce three jets of washing.

5. Device according to one of the preceding claims, **characterized in that** a block implementing the aforementioned technical fluidic is selected in a sub-group including at least a block mono-conduit suitable to produce a single jet of washing, a block with two conduits suitable to produce two jets of washing, and a block with three conduits suitable to produce three jets of washing.

6. System of washing for at least a glass of a vehicle, the aforementioned system including at least a supply pipe, **characterized in that** it understands moreover at least a jet (G) according to one of the preceding claims, coupled to an end of a supply pipe.

7. Vehicle including at least a glass, **characterized in that** it understands moreover at least a system of washing according to claim 6, intended to send lavage fluid on the aforementioned glass.

8. Vehicle according to claim 7, **characterized in that** it is of automobile type.
